# EUROPÄISCHE PATENTSCHRIFT

(11) **EP 1 425 349 B1**
(45) Veröffentlichungstag und Bekanntmachung des Hinweises auf die Patenterteilung: **28.09.2005**
(21) Anmeldenummer: 02702213.6
(22) Anmeldetag: 09.01.2002
(51) Int. Cl.: C09C 1/04

(54) **VERWENDUNG VON DOTIERTEM ZINKSULFID IN EINBRENNFARBEN**
USE OF DOPED ZINC SULPHIDE IN ENAMEL PAINTS
UTILISATION DU SULPHURE DE ZINC DOPE DANS DES COMPOSITIONS D'EMAIL

(30) Priorität: 09.01.2001 DE 10100669
(43) Veröffentlichungstag der Anmeldung: 09.06.2004
(73) Patentinhaber: Warchold, Silke, 50825 Köln (DE); Huttner, Nicole, 50823 Köln (DE)
(72) Erfinder: Warchold, Silke, 50825 Köln (DE); Huttner, Nicole, 50823 Köln (DE)
(74) Vertreter: Kreutzer, Ulrich
(86) Internationale Anmeldenummer: PCT/DE2002/000036
(87) Internationale Veröffentlichungsnummer: WO 2002/062903

(56) Entgegenhaltungen:
- EP-A- 0 297 644
- US-A- 4 086 123
- US-A- 4 216 023
- DATABASE WPI Section Ch, Week 200221 Derwent Publications Ltd., London, GB; Class E32, AN 2002-155608 XP002902535 & CN 1 320 662 A (CHANGCHUN APPLIED CHEM INST CHINESE ACAD), 7. November 2001 (2001-11-07)
- DATABASE WPI Section Ch, Week 199027 Derwent Publications Ltd., London, GB; Class L03, AN 1990-206442 XP002902536 & JP 02 138383 A (SHARP KK), 28. Mai 1990 (1990-05-28)

## Beschreibung

Die vorliegende Erfindung betrifft die Bereitstellung eines Überzugmittels, enthaltend Zinksulfid und Dotierungsmittel, das sich zur Aufbringung eines nachleuchtenden Überzugs eignet, insbesondere auf Substraten aus Glas.

Es ist bekannt, Zinksulfid als Leuchtstoff zu verwenden. Hierbei wird das Zinksulfid entweder in eine flüssige oder feste Matrix eingebracht. Hinlänglich bekannt ist die Verwendung von Zinksulfid in Farben oder Kunststoffen zur Herstellung von Produkten oder Markierungen für den Sicherheitsbereich, wie z.B. für Orientierungshilfen zur Vermeidung von Panik bei plötzlichem Lichtausfall, Markierungen von Fluchtwegen, Hindernissen oder auch als Ersatz von Notbeleuchtung.

Ein wesentlicher Nachteil bei den zuvor genannten Markierungen ist die unzureichende Abriebbeständigkeit von Aufdrucken mit Zinksulfid als Leuchtstoff. Dies ist besonders dann problematisch, wenn die zu markierenden Gegenstände einem alltäglichen Gebrauch durch Anfassen oder Begehen ausgesetzt sind. Dies hat in der Vergangenheit dazu geführt, dass zu kennzeichnende Gegenstände entweder außer Reichweite mechanischer Beanspruchungsmöglichkeiten angebracht wurden (Fluchtbeschilderung) oder der Aufdruck durch weitere Überzüge vor einem direkten mechanischen Kontakt geschützt wurde.

Aufgabe der vorliegenden Erfindung ist die Bereitstellung eines Überzugmittels, das sich zur Aufbringung eines nachleuchtenden Überzugs eignet, der gegenüber den bekannten Überzügen des Standes Technik eine verbesserte Abriebbeständigkeit gegenüber mechanischen Belastungen aufweist, und auch auf Glasoberflächen aufgebracht werden kann..
Eine weitere Aufgabe der vorliegenden Erfindung ist die Bereitstellung eines Überzugsmittels für Substrate aus Glas, das beständig gegenüber Witterungseinflüssen ist, und folglich beispielsweise für Außenfassaden verwendet werden kann.

Die erste Aufgabe wird gelöst durch die Verwendung von mit Cu, Ag, Mn, Al, Eu und/oder Dy dotiertem Zinksulfid als Pigment in keramischen Einbrennfarben, die gegebenenfalls zusätzlich einen Schutzfilm auf der keramischen Einbrennschicht enthalten.

Als keramische Einbrennfarben werden im Rahmen der vorliegenden Erfindung alle bekannten Systeme verstanden. Diese Systeme können Silizium, Titan, Bor, Magnesium, Calcium, Barium, Zirkonium, Aluminium, Phosphor oder Antimon in Form ihrer Oxide, Fluoride, Carbonate oder anderer Verbindungen enthalten.

Hierdurch ist es erstmals möglich, einen nachleuchtenden Auftrag bereitzustellen, der auf Grund seines Emaillecharakters gegenüber den bekannten Überzügen des Standes der Technik deutlich verbesserte mechanische Eigenschaften, insbesondere im Hinblick auf deren Abriebbeständigkeit, aufweist. Ein entsprechend dotiertes Zinksulfid ist bekannt und wird beispielsweise unter der Handelsbezeichnung STORELITE® von der Firma RC Tritec, CH-9053 Teufen, vertrieben.

Die Menge an verwendetem Zinksulfid in der keramischen Einbrennfarbe ist nicht kritisch und liegt in dem üblichen, dem Fachmann bekannten Bereich zwischen 30 und 70 Gew.-%, bezogen auf die Gesamtmenge aller zur Herstellung der Einbrennfarbe nötigen Komponenten.

Bevorzugt ist ein Anteil von Zinksulfid im Bereich von 40 bis 60 Gew.-% .-%, bezogen auf die Gesamtmenge aller zur Herstellung der Einbrennfarbe nötigen Komponenten.

In einer Ausführungsform der vorliegenden Erfindung liegt der Gehalt an Dotierungsmittel zwischen 0,001 und 0,25 Gew.-%, bezogen auf die Gesamtmengen von Zinksulfid und Dotierungsmittel. Bevorzugt ist ein Anteil von 0,001 und 0,15 Gew.-%, und besonders bevorzugt ein Anteil von 0,1 und 0,09 Gew.-%, an Dotierungsmittel bezogen auf die Gesamtmengen von Zinksulfid und Dotierungsmittel. Als Dotierungsmittel werden im Rahmen der vorliegenden Erfindungen solche Substanzen aus der Gruppe von Cu, Ag, Mn, Al, Eu und/oder Dy.

Das Zinksulfid hat eine Korngröße im Bereich von 1 µm bis 60 µm. Bevorzugt wird eine Korngröße die im Bereich von 1 µm bis 35 µm liegt. Besonders bevorzugt ist ein Korngröße im Bereich von 2 µm bis 25 µm. In einer besonders bevorzugten Ausführungsform der vorliegenden Erfindung liegt die Korngröße des Zinksulfides im Bereich von 3 µm bis 25 µm.
Vorteilhafterweise wird durch eine kleinere Körnung des Zinksulfides eine verbesserte chemische und mechanische Beständigkeit erzielt.

Das Zinksulfid kann in amorpher oder hexagonaler Struktur vorliegen. In der bevorzugten Ausführungsform der vorliegenden Erfindung liegt das Zinksulfid in hexagonaler Form vor.
In der hexagonalen Form wird eine verbesserte Leuchtkraft der resultierenden Überzugsmasse erreicht.

Durch die erfindungsgemäße Verwendung von dotiertem Zinksulfid ist es erstmals möglich, eine Effektlackierung für keramische Einbrennfarben bereitzustellen, deren Effekt auch noch bei einer Einbrenntemperatur von mehr als 600 °C gewährleistet ist. Üblicherweise liegt die Einbrenntemperatur für die erfindungsgemäße Verwendung zwischen 640 und 850 °C

Neben den zuvor beschriebenen Komponenten enthält die keramische Einbrennfarbe noch weitere, dem Fachmann geläufige Ausgangskomponenten und Additive wie z.B. glasbildende Stoffe, Flussmittel, organische Bindemittel etc. Besonders bevorzugt ist die Verwendung von anorganischen Fluoriden als Flussmittel.

Die Anwendung der zuvor beschriebenen keramischen Einbrennfarben kann durch alle geeigneten Auftragungsverfahren, wie z.B. Spritzen, Walzen, Drucken etc. erfolgen. Eine besonders interessante Auftragungsart ist der Siebdruck, da auf diese Weise Muster, Schriften oder dergleichen auf das zu bedruckende Substrat aufgebracht werden können. In diesem Falle ist es erforderlich, dass die keramische Einbrennfarbe zusätzlich noch ein geeignetes Siebdrucköl enthält. In der Lacktechnologie werden viele pflanzliche und tierische fette Öle mit 8 bis 22 Kohlenstoffatomen verwendet. Zu dieser Gruppe zählen unter anderen die gesättigten und ungesättigten Fettsäuren aus der Gruppe von Hexansäure Decansäure, Dodecansäure, Tetradecansäure, Hexadecansäure und die verschiedenen Isomeren, Octadecansäure und die verschiedenen Isomeren, Docosansäure, Tetracosansäure, Dodecansäure, Tetradecensäure, Hexadecensäure, Octadecensäure und weitere. Bevorzugt wird Pinienöl verwendet..

Die erfindungsgemäße Einbrennfarbe eignet sich besonders für Substrate aus Glas. Das Aufbringen der Einrennfarbe auf der glashaltigen Matrix, beispielsweise durch Siebdruckverfahren, eröffnet neuartige Anwendungsmöglichkeiten für den Einsatz nachleuchtender Aufdrucke, insbesondere zum Bedrucken von Gegenständen aus Glas, Keramik oder Porzellan - besonders bevorzugt im sanitären oder architektonischen Bereich.

So sind beispielsweise neuartige Anwendungsgebiete sicherheitsrelevanter Gegenstände denkbar, wie z.B. Geländer, Absperrungen, Handläufe Türöffner und Bodenmarkierungen. Des weiteren ist die erfindungsgemäße Verwendung nicht nur auf den sicherheitsrelevanten Bereich beschränkt, da entsprechend dem Gegenstand der vorliegenden Anmeldung auch völlig neuartige Einsatzmöglichkeiten auf dem gestalterischen Gebiet ermöglicht werden.

So können erstmals Fliesen, Geschirr oder Fassadenelemente mit einem dauerhaften, gegenüber mechanischen und witterungsbedingten Einwirkungen beständigen, nachleuchtenden Überzug versehen werden.

Gemäß einer weiteren Ausführungsform der vorliegenden Erfindung ist zusätzlich auf der Einbrennschicht eine Polymerschicht aufgebracht, die erhältlich ist durch Polymerisieren und/oder Vernetzen einer Lösung, die mindestens eine Alkoxysilanverbindung enthält. Auf diese Weise werden die mechanischen und chemischen Eigenschaften der Einbrennschicht (z.B. Korrosionsbeständigkeit oder Abriebfestigkeit) deutlich erhöht. Die erfindungsgemäße Einbrennschicht wirkt hierbei als Haftgrund.

Durch die Wahl einer Alkoxysilanverbindung als zu polymerisierende und/oder zu vernetzende Verbindung ist gewährleistet, dass die auf der Einbrennschicht befindliche Polymerschicht zum einen infolge einer Chemisorption über Si-O-Bindungen mit der Oberfläche der Einbrennschicht verbunden ist.
Die Bildung der Polymerschicht erfolgt durch an sich bekannte, dem Fachmann geläufige Polymerisationsverfahren (z.B. Lufttrocknung, Erhitzen oder UV-Bestrahlung):

Die Menge an Alkoxysilanverbindung in der aufzubringenden Lösung kann in weiten Grenzen variieren, Im allgemeinen enthält die Lösung 5 bis 45 Gew.-%, insbesondere 10 bis 30 Gew.-% der Alkoxysilanverbindung. Je nach erforderlicher Viskosität kann die Lösung zusätzlich ein polares Lösungsmittel enthalten, das so zu wählen ist, dass es nicht mit der Alkoxysilanverbindung reagiert (z.B. Ethanol).
Gemäß einer bevorzugten Ausführungsform entspricht die Alkoxysilanverbindung der allgemeinen Formel

R¹ ₐR² _{b}SiX_{(4-a-b)} Formel I

in der
- X eine Alkoxy-, eine Aryloxy- oder eine Acyloxygruppe mit 1 bis 12 Kohlenstoffatomen, vorzugsweise mit 1 bis 4 Kohlenstoffatomen darstellt, und insbesondere ausgewählt ist aus der Gruppe der Methoxy-, Ethoxy-, n-Propoxy-, i-Propoxy-, Butoxy-, Phenoxy-, Acetoxy- und Propionyloxygruppen;
- R¹ und R², gleich oder verschieden voneinander, ausgewählt sind aus der Gruppe der Amino-, Monoalkylamino- oder Dialkylaminoreste;
- Alkylreste, insbesondere der Alkylreste mit 1 bis 6 Kohlenstoffatomen, vorzugsweise der Methyl-, Ethyl-, n-Propyl-, Isopropyl-, n-Butyl-, s-Butyl-, t-Butyl-, Pentyl-, Hexyl- oder Cyclohexylreste;
- Alkenylreste, insbesondere der Alkenylreste mit 2 bis 6 Kohlenstoffatomen, vorzugsweise der Vinyl-, 1-Propenyl-, 2-Propenyl- oder Butenylreste;
- Alkinylreste, insbesondere der Alkenylreste mit 2 bis 6 Kohlenstoffatomen, vorzugsweise der Acetylenyl- oder Propargylreste;
- Arylreste, insbesondere der Arylreste mit 6 bis 10 Kohlenstoffatomen, vorzugsweise Phenyl- oder Naphtenylreste;
- Epoxyreste, insbesondere der Epoxyreste mit 3 bis 16 Kohlenstoffatomen, vorzugsweise der Glycidyl-, Glycidylether-, Glycidylester- oder Glycidyloxyalkylreste; oder
- zuvor beschriebenen Gruppe X; und
a und b, gleich oder verschieden voneinander, den Wert 0, 1, 2 oder 3 darstellen, wobei die Summe von a und b den Wert 3 nicht überschreitet.

Eine entsprechende Alkoxysilanverbindung kann ein Tetraalkoxysilan, Epoxyalkoxysilan oder Aminoalkoxysilan sein.
Sehr gute Ergebnisse wurden mit Tetraethoxysilan, 3-Glycidyloxypropyl-trimethoxysilan, 3-Aminopropyl-trimethoxysilan und 3-(Aminoethylamin)propyl-trimethoxysilan als Alkoxysilanverbindung erhalten.
Um die Haftung zwischen Einbrenn- und Polymerschicht noch weiter zu verbessern empfiehlt es sich, der auf die Einbrennschicht aufzubringenden Lösung zusätzlich eine zur Bildung eines Titankomplexes fähige Verbindung zuzuseuen. Der Begriff "zur Bildung eines Titankomplexes fähige Verbindung" bezeichnet Verbindungen, die mit der Alkoxysilanverbindung und der Einbrennschicht über Komplexbindung verbrückte TiO₂-SiO₂-Systeme bilden. Durch die Reaktion zwischen Alkoxysilanverbindung und Titanverbindung wird darüber hinaus eine vernetzte Polymerschicht erhalten.

Eine besonders geeignete Verbindung ist eine Alkoxytitanverbindung, ein Titansäureester oder ein Titanchelat, insbesondere eine Verbindung der Formel Ti(OR)₄, in der R einen Alkylrest mit 1 bis 6 Kohlenstoffatomen darstellt, der vorzugsweise ausgewählt ist aus der Gruppe der Methyl-, Ethyl-, n-Propyl-, i-Propyl- und Butylreste.

Sehr gute Ergebnisse wurden mit Tetraethoxytitanat Ti(OC₂H₅)₄ erzielt.

Das molare Verhältnis zwischen Alkoxysilanverbindung und Titanverbindung ist nicht kritisch und liegt im allgemeinen zwischen 1 und 20.

Lösungen, die sowohl eine Alkoxysilanverbindung als auch eine zur Bildung eines Titankomplexes fähige Verbindung enthalten, sind beispielsweise in der DE 41 38 218 A1 beschrieben und können von verschiedenen Firmen bezogen werden (z.B. Deltacoll® 80 von der Fa. Dörken).

Ein weiterer Gegenstand der vorliegenden Erfindung ist eine Mehrschichtlackierung, bestehend aus einer unteren, auf einem Glassubstra aufgetragenen keramischen Einbrennfarbe mit Cu, Ag, Mn, Al, Eu und/oder Dy dotiertem Zinksulfid als Pigment, und einer hierauf befindlichen Polymerschicht, insbesondere einer solchen aus einer der Polysiloxanverbindungen gemäß Formel I.
Das folgende Beispiel dient der Erläuterung der Erfindung, ohne diese einzuschränken.

### Beispiel

Zur Herstellung einer keramischen Einbrennfarbe werden in einem 250 ml Becherglas 100 Gramm dotiertes Zinksulfid (STORELITE® RNS natur der Fa. RC Tritec), 15 g Transparentfluss 10 4000 der Fa. dmc², Frankfurt, und 30 g handelsübliches Pinienöl unter Rühren zu einer homogenen, pastösen Mischung verarbeitet.

Diese Mischung wird durch Siebdruck unter Verwendung eines Polyestersiebs mit einer Maschenweite 40 von 39 Fäden/cm auf eine Glasplatte aus Floatglas mit den Abmessungen 10 * 10 cm und einer Dicke von 6 mm aufgerakett Anschließend wird die bedruckte Glasplatte vier Minuten in einem Trockenofen bei einer Temperatur von 140°C getrocknet. Anschließend wird die Platte in einem Rollofen gegeben und bei einer Temperatur von 640 °C für eine Kontaktzeit von vier Minuten eingebrannt.

Die Prüfung auf verbesserte Eigenschaften gegenüber äußeren Einflüssen soll an Hand der chemischen Resistenz und der Abriebfestigkeit untersucht werden.

Die chemische Resistenz wird an Hand des "Kesternichtests" und einer Prüfung auf Säure- und Laugenbeständigkeit untersucht.

Der "Kesternichtest" wird mit destilliertem Wasser in Gegenwart von Schefeldioxid durchgeführt. Hierbei wird die Beständigkeit des erfindungsgemäß verwendeten Zinksulfids in der Einbrennfarbe gegenüber feuchter aggressiver Feuchtigkeit untersucht. Die Untersuchung erfolgt in einer Prüfkammer mit einem Volumen von 250 l die hermetisch verschließbar ist, erfolgt die Untersuchung. Die Prüfkörper werden in der im Prüfraum befindlichen Wanne so angeordnet, das keiner der Prüfkörper durch Kondensat benetzt wird. In der Wanne ist eine definierte Menge an destilliertem Wasser ( in einer Menge von 2 l). Über ein Rohr wird in die hermetisch geschlossene Prüfkammer eine definierte Menge an Schwefeldioxid eingeleitet. Die Temperatur wird auf 40 °C gesteigert und 24 Stunden gehalten. Hiernach endet ein Zyklus. Wasser und Atmosphäre in der Prüfkammer werden ausgetauscht. Der Versuch endet nach zehn Zyklen. Die Auswertung erfolgt über die visuelle Bewertung der Prüfkörper nach den zehn Zyklen.

In einem weiteren Test wird die Laugen- und Säurebeständigkeit der Prüfkörper untersucht. Die Säurebeständigkeit wird gemäß der DIN 12 116 und DIN EN 122 überprüft. Hierbei werden Säuren verwendet, wie sie in handelsüblichen Reinigungsmitteln vorhanden sind. Als Säuren werden Zitronensäure, Salzsäure und Schwefelsäure in unterschiedlichen Konzentration eingesetzt.

Die Laugenbeständigkeit wird gemäß DIN 51 035 und DIN EN 122 überprüft. Als Referenz dient Natronlauge, wie sie in handelsüblichen Reinigungsmitteln in unterschiedlichen Konzentrationen vorhanden ist.

Die Auswertung der Prüfkörper erfolgt über visuelle Bewertung und eine Klassifizierung in unterschiedliche Oberflächenänderungen von keinem Angriff, über schwache bis starke Glanzverluste bis hin zur Entfernung der Einbrennschicht.

Sehr gute Ergebnisse wurden erhalten bei Einsatz einer zusätzlichen Polymerschicht auf Basis handelsüblicher Polyurethane beobachtet, die Polytetraethoxysilan, Poly-3-Glycidyloxypropyl-trimethoxysilan, Poly-3-Aminopropyl-trimethoxysilan und Poly-3-(Aminoethylamin)propyl-trimethoxysilan als Polyalkoxysilanverbindung in einer Menge zwischen 10 bis 40 Gew-% enthält, bezogen auf den Anteil der Polyalkoxysilanverbindung an dem Festkörper der resultierenden Beschichtung. Hier liegen die Werte der Klassifizierung des Mehrschichtüberzugs bei 1.

Dies bedeutet das kein Angriff auf den Prüfkörper zu beobachten war.

## Patentansprüche

1. Verwendung von mit Cu, Ag, Mn, Al, Eu und/oder Dy dotiertem Zinksulfid als Pigment in keramischen Einbrennfarben zum Bedrucken von Gegenständen aus Glas, Keramik oder Porzellan.

2. Verwendung nach Anspruch 1 im sanitären oder architektonischen Bereich.

3. Verwendung nach Anspruch 1 oder 2, **dadurch gekennzeichnet, dass** das Zinksulfid in hexagonaler Form vorliegt.

4. Verwendung nach einem der vorhergehenden Ansprüche, **dadurch gekennzeichnet, dass** die Dotierung zwischen 0,1 und 0,001 Gew.-% beträgt, bezogen auf die Gesamtmengen von Zinksulfid und Dotierungsmittel.

5. Verwendung nach einem der vorhergehenden Ansprüche, **dadurch gekennzeichnet, dass** die keramische Einbrennfarbe bei einer Temperatur von mehr als 600 °C eingebrannt wird, insbesondere bei einer Temperatur zwischen 640 und 850 °C.

6. Verwendung nach einem der vorhergehenden Ansprüche, **dadurch gekennzeichnet, dass** die keramische Einbrennfarbe zusätzlich ein Flussmittel enthält, insbesondere ein anorganisches Fluorid.

7. Verwendung nach einem der vorhergehenden Ansprüche, **dadurch gekennzeichnet, dass** die keramische Einbrennfarbe im Siebdruckverfahren auf das zu bedruckende Substrat aufgebracht wird, wobei die keramische Einbrennfarbe zusätzlich ein Siebdrucköl, insbesondere Pinienöl, enthält.

8. Verwendung nach einem der vorhergehenden Ansprüche, **dadurch gekennzeichnet, dass** die Gegenstände Fliesen, Geschirr oder Fassadenelemente sind.

9. Verwendung nach einem der vorhergehenden Ansprüche, **dadurch gekennzeichnet, dass** auf der aus der keramischen Einbrennfarbe erhältlichen Schichte zusätzlich eine Schicht aus einem härtbaren oder vernetzbaren Polymer aufgebracht ist, die erhältlich ist durch Polymerisieren und/oder Vernetzen einer Lösung, die mindestens eine Alkoxysilanverbindung enthält.

## Claims

1. Use of zinc sulfide doped with Cu, Ag, Mn, Al, Eu and/or Dy as a pigment in ceramic stoving enamels for printing articles of glass, ceramics or porcelain.

2. Use according to claim 1 in the sanitary or architectural sector.

3. Use according to claim 1 or claim 2, **characterised in that** the zinc sulfide is present in hexagonal form.

4. Use according to any one of the preceding claims, **characterised in that** the doping amounts to between 0.1 and 0.001 wt.%, relative to the total quantities of zinc sulfide and dopant.

5. Use according to any one of the preceding claims, **characterised in that** the ceramic stoving enamel is stoved at a temperature of greater than 600°C, in particular at a temperature of between 640 and 850°C.

6. Use according to any one of the preceding claims, **characterised in that** the ceramic stoving enamel additionally contains a flux, in particular an inorganic fluoride.

7. Use according to any one of the preceding claims, **characterised in that** the ceramic stoving enamel is applied onto the substrate to be printed by the screen printing process, wherein the ceramic stoving enamel additionally contains a screen printing oil, in particular pine oil.

8. Use according to any one of the preceding claims, **characterised in that** the articles are tiles, crockery or building cladding elements.

9. Use according to any one of the preceding claims, **characterised in that** a layer of a curable or crosslinkable polymer is additionally applied onto the layer obtainable from the ceramic stoving enamel, said former layer being obtainable by polymerising and/or crosslinking a solution which contains at least one alkoxysilane compound.

## Revendications

1. Utilisation de sulfure de zinc dopé par Cu, Ag, Mn, Al, Eu et/ou Dy comme pigment dans des colorants à cuire céramiques pour l'impression d'objets en verre, céramique ou porcelaine.

2. Utilisation selon la revendication 1 dans le domaine sanitaire ou architectonique.

3. Utilisation selon l'une des revendications 1 ou 2, **caractérisée par le fait que** le sulfure de zinc se présente dans la forme hexagonale.

4. Utilisation selon l'une quelconque des revendications précédentes, **caractérisée par le fait que** le dopage se situe entre 0,1 et 0,001% en poids, par rapport aux quantités totales de sulfure de zinc et d'agent de dopage.

5. Utilisation selon l'une quelconque des revendications précédentes, **caractérisée par le fait que** le colorant à cuire céramique est cuit à une température de plus de 600°C, en particulier à une température entre 640 et 850°C.

6. Utilisation selon l'une des revendications précédentes, **caractérisée par le fait que** le colorant à cuire céramique contient en outre un fondant, en particulier un fluorure anorganique.

7. Utilisation selon l'une des revendications précédentes, **caractérisée par le fait que** le colorant à cuire céramique est appliqué sur le substrat à imprimer dans le procédé de sérigraphie, le colorant à cuire céramique contenant en outre une huile de sérigraphie, en particulier de l'huile de pin.

8. Utilisation selon l'une des revendications précédentes, **caractérisée par le fait que** les objets sont des carreaux de céramique, de la vaisselle ou des éléments de façade.

9. Utilisation selon l'une des revendications précédentes, **caractérisée par le fait que**, sur la couche obtenue à partir du colorant à cuire céramique, est appliquée en outre une couche d'un polymère durcissable ou réticulable, qui est susceptible d'être obtenu par polymérisation et/ou réticulation d'une solution qui contient au moins un composé alcoxysilane.
